# EUROPÄISCHE PATENTSCHRIFT

(11) **EP 4 401 045 B1**
(45) Veröffentlichungstag und Bekanntmachung des Hinweises auf die Patenterteilung: **30.10.2024**
(21) Anmeldenummer: 23150892.0
(22) Anmeldetag: 10.01.2023
(51) Int. Cl.: G06V 10/12, G05B 19/4061, G06V 10/22, G06V 10/25, G06V 10/44, G06V 20/52

(54) **KONFIGURATION EINES 3D-SENSORS FÜR EINE SICHERE OBJEKTVERFOLGUNG**
CONFIGURING A 3D SENSOR FOR SECURE OBJECT TRACKING
CONFIGURATION DE CAPTEUR 3D POUR UN SUIVI D'OBJET SÉCURISÉ

(43) Veröffentlichungstag der Anmeldung: 17.07.2024
(73) Patentinhaber: SICK AG, 79183 Waldkirch (DE)
(72) Erfinder: Hammes, Markus, 79117 Freiburg (DE)

(56) Entgegenhaltungen:
- EP-A1- 3 611 422
- DE-B4- 102005 063 217
- US-A1- 2015 036 887
- US-A1- 2015 269 427
- US-A1- 2019 138 818
- ROUGIER CAROLINE ET AL: "Fall Detection from Depth Map Video Sequences", 20 June 2011, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 121 - 128, ISBN: 978-3-540-74549-5, XP047446501

## Beschreibung

Die Erfindung betrifft ein Verfahren zur automatischen Konfiguration eines 3D-Sensors, insbesondere einer 3D-Kamera, für eine sichere Objektverfolgung und ein 3D-Sensorsystem nach dem Oberbegriff von Anspruch 1 beziehungsweise 9.

Eine 3D-Kamera misst einen Abstand und gewinnt dadurch eine Tiefeninformation. Die erfassten dreidimensionalen Bilddaten mit Abstands- oder Entfernungswerten für die einzelnen Pixel werden auch als 3D-Bild, Entfernungsbild oder Tiefenkarte bezeichnet Zur Ermittlung der Tiefeninformationen sind verschiedene Verfahren bekannt. Eine Lichtlaufzeitkamera (TOF, Time of Flight) beispielsweise leuchtet eine Szene mit amplitudenmoduliertem Licht aus. Das aus der Szene zurückkehrende Licht wird empfangen und mit der gleichen Frequenz demoduliert, die auch für die Modulation des Sendelichts verwendet wird (Lock-In-Verfahren). Nach wiederholter Messung mit unterschiedlichen relativen Phasenlagen zwischen den Signalen für die sendeseitige Modulation und die empfangsseitige Demodulation lässt sich die laufzeitbedingte absolute Phasenverschiebung zwischen Sende- und Empfangssignal ermitteln, die wiederum proportional zum Objektabstand in der Szene ist. Andere 3D-Kameras nutzen das Stereoskopieprinzip, ein Lichtschnitt- oder Projektionsverfahren oder sind als plenaptische Kameras ausgebildet

Eine besondere Anwendung einer 3D-Kamera ist die Sicherheitstechnik zur Vermeidung von Unfällen vor allem im industriellen Umfeld. Dabei werden Personen in der Umgebung einer Gefahrenstelle überwacht, beispielsweise einer Maschine oder speziell eines Roboters. Bei Erkennung einer Gefahrensituation erfolgt eine sicherheitsgerichtete Reaktion, um einen Unfall zu vermeiden. In der Sicherheitstechnik eingesetzte Sensoren müssen besonders zuverlässig arbeiten und deshalb hohe Sicherheitsanforderungen erfüllen, beispielsweise die Norm EN1 3849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. Die Sicherheitsnormen spezifizieren weiterhin sogenannte Sicherheitsniveaus oder Sicherheitsanforderungsstufen, mit denen die erreichbare Sicherheit abgestuft wird. Beispiele dafür sind SIL nach IEC61508/IEC61511 (Safety Integrity Level) mit 1 als niedrigste und 4 als höchster Stufe oder PL (Performance Level) nach EN ISO 13849-1 mit a "niedrig" bis e "hoch".

Die verbreitetste Absicherung basiert auf von Hand konfigurierten Schutzfeldern, in die nicht eingegriffen darf. Wesentlich flexibler ist die Erkennung eines unterschrittenen Sicherheitsabstands in Abhängigkeit von der Bewegungsgeschwindigkeit (Speed-and-Separation). Dafür sind jedoch neue Sicherheitsfunktionen erforderlich, die über einfache Funktionen wie Schutzfeldauswertungen hinausgehen. Dazu zählt eine Objektverfolgung (object tracking), mit der die jeweilige aktuelle Position und auch Bewegungshistorie der erfassten Objekte bekannt wird.

Solche erweiterten Sicherheitsfunktionen stellen bereits bei der Inbetriebnahme und Konfiguration besondere Herausforderungen. So wäre zwar grundsätzlich denkbar, einen Detektionsbereich für eine Objektverfolgung in einer Art CAD-Programm analog zu einer herkömmlichen Schutzfeldkonfiguration aus 3D-Körpern zusammenzusetzen. Das wird aber ausgesprochen komplex und überfordert häufig die Anwender, und in jedem Fall ist es zeitaufwändig und fehleranfällig. Im Bereich der Sicherheitstechnik sind aber Fehler besonders kritisch, weil womöglich eine Gefahrenquelle nicht ausreichend abgesichert wird und es doch zu Unfällen kommen kann.

Die DE 10 2006 048 166 A1 offenbart ein Verfahren zur Beobachtung einer Person in einem industriellen Umfeld. Dabei wird ein 3D-Modell der Person auf Basis von 3D-Punktdaten erstellt, die beispielsweise mit einer Stereokamera aufgenommen werden. In Kenntnis der Position und des Bewegungsverhaltens einer Maschine und des virtuellen Körpermodells wird ein Gefährdungspotential ermittelt und gegebenenfalls sichernd auf die Maschine eingewirkt. Es wird aber keine Konfiguration der Stereokamera erläutert.

In der EP2 825 812 B1 werden ein Verfahren und eine Vorrichtung zum Absichern eines gefährlichen Arbeitsbereichs einer automatisiert arbeitenden Maschine beschrieben. Dabei wird eine Mischform einer Schutzfeldüberwachung und einer Objektverfolgung eingesetzt. Das erfordert weiterhin die herkömmliche händische Konfiguration von Schutzfeldern.

Aus der DE 10 2005 063 217 B4 ist ein Verfahren zum Konfigurieren einer Überwachungseinrichtung zum Überwachen eines Raumbereichs bekannt. Dabei wird der Boden anhand sogenannter Setupmarken erkannt, die eigens in der Szenerie angebracht werden müssen. Die Absicherung erfolgt mittels Schutzfeldem, die dann bezüglich des Bodens wie oben beschrieben in einer Art CAD-Programm von Hand definiert werden.

In der EP 3 203 263 B1 projiziert ein Laserscanner seine gegenwärtig konfigurierten Schutzfelder auf den Boden. Dazu kann mit einem Neigungssensor die eigene Orientierung beziehungsweise einem Detektor die eigene Höhe bestimmt werden, damit passend und ohne Verzerrungen aus der Perspektive des Laserscanners projiziert werden kann. Es bleibt bei dem herkömmlichen Schutzfeldansatz, eine Objektverfolgung ist nicht vorgesehen. Selbst nur auf Schutzfelder bezogen erleichtert die Visualisierung lediglich deren Konfiguration, ändert aber nichts an der Tatsache, dass das passende Schutzfeld von Hand eingestellt werden muss.

Die EP 3 521 860 B1 beschreibt einen mehrlagigen Laserscanner auf einem Fahrzeug, der die jeweilige erfasste Kontur mit einem Bodenmodell vergleicht. Die Art des Sensors und die Montageposition dienen der Hindemisertassung in Fahrtrichtung und eignen sich schon prinzipiell nicht für eine Objektverfolgung.

Aus der Arbeit von Rougier, Caroline, et al. "Fall detection from depth map video sequences." Toward Useful Services für Elderly and People with Disabilities: 9th International Conference on Smart Hornes and Health Telematics, ICOST 2011, Montreal, Canada, June 20-22, 2011. Proceedings 9. Springer Berlin Heidelberg, 2011 ist eine 3D-Überwachung bekannt, der eine Erkennung der Bodenebene vorausgeht. Dazu wird, um einen rechenaufwändigen RANSAC-Ebenenfit zu vermeiden, ein sogenanntes V-Disparitäts-Bild erzeugt, das auf zeilenweise berechneten Histogrammen von Disparitäten beruht.

Die EP 3 611 422 A1 offenbart eine Sensoranordnung zum Absichern einer Gefahrensteife zu einer Maschine. Dringt ein neues Objekt in den Überwachungsbereich ein, wie ein automatisches Fahrzeug, so besteht die Möglichkeit, dafür dynamisch eine weitere Gefahrenstelle zu erzeugen und zu überwachen.

In der US 2019/0138818 A1 wird eine automatische Bodenebenenkalibrierung offenbart. Mit einem Algorithmus des maschinellen Lernens wird aus 2D-Bildem eine Tiefenkarte erzeugt. Die Bodenebene wird dann aus der Tiefenkarte abgeleitet. Die Tiefenkarte und die Bodenebene werden aktualisiert, wenn seit deren Erzeugung eine Mindestdauer verstrichen ist und sich ein Hintergrundmodell verändert hat Das Hintergrundmodell mittelt 2D-Bilder über eine gewisse Dauer, um so ein sich nicht oder nur sehr langsam veränderliches Bild zu gewinnen.

Die US 2015/0269427 A1 offenbart ein Mehrkamerasystem, das einen Arbeitsbereich aus mehreren Perspektiven aufnimmt und Personen in synchronen Aufnahmen erkennt. Die Suche kann auf einen interessierenden Bereich beschränkt werden, wobei der interessierende Bereich als sichtbarer Boden zuzüglich einer Toleranz für eine ganz am Rand stehende Person festgelegt sein kann.

Die US 2015/0036887 A1 offenbart ein Verfahren zur Objekterkennung, wobei eine Bodenfläche anhand von in einem Tiefenbild selektierten Bildpunkten, welche einen der Bodenebene entsprechenden Abstand haben, erkannt wird. Aufgrund einer zeitlichen und räumlichen Filterung dieser Bildpunkte wird eine genauere Erkennung der Bodenebene erreicht.

Einige Bildverarbeitungsprogramme und inzwischen auch Smartphones bieten die Möglichkeit, bewegliche Objekte aus einer Aufnahme zu eliminieren, indem pixelweise ein Medianfilter über eine Bilderserie angewandt wird. Dadurch kann beispielsweise eine scheinbar menschenleere Sehenswürdigkeit fotografiert werden. Das absichtliche Übersehen von Menschen ist aber das genaue Gegenteil dessen, was eine sicherheitstechnische Überwachung leisten sollte.

Die bekannten 3D-Konfigurationsabläufe sind somit komplex und einer Automatisierung nicht zugänglich. Daher ist Aufgabe der Erfindung, die Konfiguration zu erleichtern.

Diese Aufgabe wird durch ein Verfahren zur automatischen Konfiguration eines 3D-Sensors für eine sichere Objektverfolgung und ein 3D-Sensorsystem nach Anspruch 1 beziehungsweise 9 gelöst. Der 3D-Sensor kann grundsätzlich ein beliebiges Sensorprinzip verwenden. Es handelt sich um eine 3D-Kamera, wie einleitend kurz erläutert. Sie kann nach der Konfiguration für eine Objektverfolgung eingesetzt werden, mit der die jeweilige Position der beweglichen Objekte in einem Erfassungsbereich des 3D-Sensors bestimmt wird, was wiederum als Voraussetzung einer weitergehenden Auswertung für eine Absicherung einer Maschine beziehungsweise eine Unfällverrneidung nutzbar ist. Die Objektverfolgung ist sicher, vorzugsweise gilt das auch für den 3D-Sensor selbst. Begriffe wie sicher und Sicherheit bedeuten in dieser Beschreibung die Erfüllung von Anforderungen einer Sicherheitsnorm für berührungslos wirkende Schutzeinrichtungen oder Maschinensicherheit zur Unfallvermeidung. Einleitend sind Beispiele solcher Normen genannt, wobei gleichwertige andere Normen ebenso wie regionale Varianten oder Nachfolgenormen ebenso umfasst sind. Eine Sicherheitsnorm gibt insbesondere Sicherheitsniveaus mit klar definierter Fehlerbeherrschung vor.

Der 3D-Sensor nimmt mindestens ein 3D-Bild auf (Entfernungsbild, Abstandsbild, Tiefenkarte), das in einem X-Y-Raster von Pixeln jeweilige Entfernungen oder Abstände codiert. Auf die konkrete Repräsentation kommt es dabei nicht an. Durch Auswertung des 3D-Bildes wird ein Detektionsbereich innerhalb des Erfassungsbereichs festgelegt. Die Objektverfiolgung soll nur innerhalb des Detektionsbereichs stattfinden, weil in anderen Teilen des Erfassungsbereichs keine Bewegungen sicherheitsrelevanter Objekte zu erwarten sind. Ziel der Konfiguration ist, diesen Detektionsbereich zu finden, in dem sich die möglichen sicherheitskritischen Objekte bewegen, wie Personen, Fahrzeuge, Maschinen(teile) und dergleichen.

Die Erfindung geht von dem Grundgedanken aus, den Detektionsbereich anhand einer Referenzfläche zu finden, auf der sich Objekte bewegen werden. In den meisten Fällen ist das die Bodenebene oder kurz der Boden. Es werden dafür diejenigen Bildpunkte in dem 3D-Bild identifiziert, die der Referenzfläche entsprechen. Aus diesen Bildpunkten wird dann der Detektionsbereich bestimmt. Das ist nicht notwendig nur die Vereinigungsmenge der Bildpunkte, es können noch Filter vorgesehen sein, die den Detektionsbereich erweitern, abrunden oder beispielsweise unzugängliche Bereiche der Referenzfläche wieder ausschließen.

Das Verfahren läuft automatisch ab, es handelt sich um ein computerimplementiertes Verfahren. Dafür ist mindestens eine Recheneinheit in dem 3D-Sensor vorgesehen und/oder mindestens temporär für die Konfiguration oder auch dauerhaft für die weitere Sicherheitsüberwachung daran angeschlossen. Beispiele für eine interne Recheneinheit sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein KI-Prozessor, eine NPU (Neural Processing Unit), eine GPU (Graphics Processing Unit) oder dergleichen. Eine angeschlossene Recheneinheit kann ein Computer beliebiger Bauart einschließlich Notebooks, Smartphones, Tablets, einer (Sicherheits-)steuerung ebenso sein wie ein lokales Netzwerk, ein Edge-Device oder eine Cloud.

Die Erfindung hat den Vorteil, dass die Konfiguration erheblich vereinfacht und unnötige Komplexität jedenfalls für den Anwender vermieden wird. Dadurch kann die Konfiguration auch durch einen Anwender durchgeführt werden, der über kein vertieftes Wissen der speziellen verwendeten Sensorik verfügt. Durch die Automatisierung wird nicht nur die Inbetriebnahmezeit erheblich verkürzt, die verringerte Komplexität vermeidet Fehler von Anfang an und sorgt dadurch für mehr Sicherheit.

Bevorzugt wird die 3D-Lage der Referenzfläche mittels Einpassens einer Ebene bestimmt, die bestmöglich mit den in dem mindestens einen 3D-Bild aufgenommenen Bildpunkten übereinstimmt. Die 3D-Lage im Raum bezeichnet die Orientierung und Position der Referenzfläche, beispielsweise bezogen auf ein Kamerakoordinatensystem oder ein Weltkoordinatensystem, in dem die Kameraposition bekannt ist. Jeder Bildpunkt des 3D-Bildes enthält den an seiner X-Y-Position gemessenen Abstand oder Z-Wert. Es ist daher algorithmisch möglich, eine Referenzfläche bester Übereinstimmung zu den Bildpunkten zu finden (Ebenenfit). Dabei sind Toleranzen zugelassen, die Bildpunkte werden im realen 3D-Bild einer realen Szene nicht genau auf einer mathematischen Ebene liegen. Vorzugsweise wird die größtmögliche Referenzfläche mit den meisten dazu passenden Bildpunkten gesucht. Anschaulich wird der Boden die meisten Bildpunkte umfassen, die untereinander ein gewisses Rauschen aufweisen, was aber das deutlich sinnvollere Ergebnis ist als eine kleine, nahezu perfekt eben vermessene Fläche beispielsweise eines Regalbretts.

Der 3D-Sensor misst bevorzugt mittels eines Lagesensors die eigene Orientierung, daraus wird eine erwartete Orientierung der Referenzfläche abgeleitet, und die erwartete Orientierung wird verwendet, um der Referenzfläche entsprechende Bildpunkte zu identifizieren. Dies ist eine Alternative oder Ergänzung zu einem rein algorithmischen Auffinden der Referenzfläche. Aus der eigenen Orientierung des 3D-Sensors kann eine Erwartung an die Orientierung der Referenzfläche beziehungsweise des Bodens abgeleitet werden. Das wiederum ist ein starker Ausgangspunkt für einen Algorithmus, der die der Referenzfläche entsprechenden Bildpunkte identifiziert, beispielsweise indem bezüglich der erwarteten Orientierung in der richtigen Perspektive Abstandsbereiche gebildet und dazu passende Bildpunkte gezählt werden. Sofern auch noch die Montagehöhe des 3D-Sensors kalibriert oder vorab gemessen wird, lassen sich die Bildpunkte direkt als passend oder nicht passend einordnen.

Es wird eine Bildsequenz mit einer Vielzahl von 3D-Bildern aufgenommen, während sich Objekte durch den Erfassungsbereich bewegen. Die Konfiguration beruht dann nicht mehr nur auf einem 3D-Bild, sondern einer zeitlichen Abfolge von 3D-Bildern. Dadurch stehen mehr Informationen für eine noch passgenauere Konfiguration zur Verfügung. Insbesondere können bewegliche von nicht beweglichen Abschnitten unterschieden werden, und es wird vermieden, dass die Konfiguration auf einem 3D-Bild beruht, das in einer ungünstigen Konstellation aufgenommen wurde. Zur Unterstützung der Konfiguration können während der Aufnahme der Bildsequenz Personen und sonstige sicherheitsrelevante Objekte typische Bewegungen ausführen, die möglichst repräsentativ für die denkbaren Bewegungen sind.

Es werden wiederholt anhand der 3D-Bilder aus der Bildsequenz der Referenzfläche entsprechende Bildpunkte identifiziert, um auch temporär verdeckte Teile der Referenzfläche zu erfassen. Durch Beobachtung des Erfassungsbereichs über eine gewisse Dauer und entsprechende Auswertung werden Verdeckungen aufgelöst, weil die Objekte sich weiterbewegt haben.

Es werden Bildpunkte bestimmt, in denen sich der jeweils gemessene Abstand über die 3D-Bilder der Bildsequenz um mehr als eine Rauschtoleranz verändert, und diese Bildpunkte werden dem Detektionsbereich zugeschlagen- Eine mehr als rauschbedingte Veränderung des Abstandswerts bedeutet, dass sich an der Position des betroffenen Bildpunktes ein Objekt bewegt hat. Solche Veränderungsbereiche können den Detektionsbereich oder einen Kem-Detektionsbereich als Ausgangspunkt für die Festlegung des Detektionsbereichs bilden, oder der bisherige Detektionsbereich wird entsprechend erweitert. Dem Einpassen einer Referenzfläche werden vorzugsweise in einem Veränderungsbereich die fernsten gemessenen Abstandswerte zugrunde gelegt, denn kürzere Abstände sind auf bewegliche Objekte zurückzuführen. Veränderungsbereiche gehören nicht zwingend zu der Referenzfläche, wie das Beispiel einer Person nahe einer Wand zeigt. Ein Teil dieser Person wird über dem Boden, ein anderer Teil aber vor der Wand aufgenommen. Als Veränderungsbereich wird beides erkannt.

Für benachbarte Bildpunkte von der Referenzfläche entsprechenden Bildpunkten wird bevorzugt geprüft, ob die gemessenen Abstandswerte innerhalb einer Abstandstoleranz mit dem Abstand zu der Referenzfläche verträglich sind, und ein benachbarter Bildpunkt, bei dem dies zutrifft, wird dem Detektionsbereich zugeschlagen. Das ist eine Art Auffüllfunktion für den Detektionsbereich (region growing). Der anfänglich oder bisher bestimmte Detektionsbereich mit der Referenzfläche entsprechenden Bildpunkten wird um benachbarte Bildpunkte erweitert, sofern diese einen im Rahmen der Abstandstoleranz ähnlichen Abstand gemessen haben. Zumindest teilweise kann sich diese Bedingung bereits mit dem Einpassen einer Ebene beziehungsweise dem ursprünglichen Identifizieren von der Referenzfläche entsprechenden Bildpunkte überschneiden, je nach dafür verwendetem Algorithmus. In der Regel wird aber das Auffüllen eine neue Bedingung setzen, die zu einem anderen Ergebnis führt. Überdies kann das Auffüllen ein- oder mehrfach iteriert werden, so dass dann auch Nachbarn von Nachbarn in immer höheren Ordnungen zum Zuge kommen, solange die Abstandstoleranz erfüllt ist. Zumindest die derart kumulierte Abstandstoleranz wird sich von der ursprünglichen Zugehörigkeitsbedingung eines Bildpunktes zu der Referenzfläche unterscheiden.

Die Abstandstoleranz ist bevorzugt groß genug gewählt, dass eine Treppenstufe oder geneigte Rampe noch zu der Referenzfläche verträglich ist. Damit ist absichtlich eine relative großzügige Abstandstoleranz gewählt. Die Abstandstoleranz kann beispielsweise aus dem Intervall 5-50 cm gewählt werden. Für das Identifizieren der ursprünglichen Referenzfläche ist das auch denkbar, birgt aber die Gefahr, dass eine vermeintliche Referenzfläche resultiert, die mit einer Bodenebene kaum noch etwas gemein hat. Ein sukzessives Auffüllen hingegen kann sehr wirkungsvoll sein, insbesondere um die einmal gefundene Referenzfläche nachträglich noch um schräge Anteile zu erweitern, für die hier stellvertretend eine Treppe oder Rampe genannt sind.

Vorzugsweise wird der konfigurierte Detektionsbereich angezeigt, und es wird eine Bestätigung angefordert, ehe der Detektionsbereich für eine sichere Objektverfolgung verwendet wird. Die Anzeige erfolgt beispielsweise als 2D- oder 3D-Bild, vorzugsweise als Bild der Szenerie mit überlagerter Kennzeichnung des konfigurierten Detektionsbereichs. Durch die Bestätigung bekommt der Anwender oder Sicherheitsexperte das letzte Wort, ob mit dem Detektionsbereich die geforderte Absicherung geleistet wird. Eine solche abschließende Freigabe kann eine Anforderung einer Sicherheitsnorm sein, unabhängig von der Leistungsfähigkeit eines automatisierten Konfigurationsverfahrens. Über die bloße Bestätigung hinaus können dem Anwender Funktionen zum nachträglichen Korrigieren oder Bearbeiten des Detektionsbereichs angeboten werden. Das kann auch so weit gehen, dass die automatische Konfiguration nur ein erster Schritt der Konfiguration ist, die allerdings schon sehr zielgerichtete Rohdaten liefert, mit denen der Anwender den Detektionsbereich endgültig festlegt.

Im Anschluss an die Konfiguration des Detektionsbereichs werden vorzugsweise zyklisch weitere 3D-Bilder aufgenommen und darin Objekte verfolgt, um als Sicherheitsfunktion die jeweils aktuelle Position von beweglichen Objekten in dem Detektionsbereich auszugeben. Es schließt sich mit anderen Worten an die Konfiguration der eigentliche Betrieb an, in dem der konfigurierte Detektionsbereich genutzt wird, um darin auf sichere Weise Objekte zu verfolgen. Damit ist stets auf sichere Weise die jeweilige aktuelle Position aller sicherheitsrelevanten Objekte bekannt. Es ist denkbar, während des Betriebs aufgenommene 3D-Bilder für eine weitere Verfeinerung der Konfiguration des Detektionsbereichs zu nutzen. Möglicherweise ist jedoch, wie im Vorabsatz erläutert, eine Freigabe erforderlich, ehe eine solche Anpassung des Detektionsbereichs tatsächlich für den weiteren Betrieb benutzt wird.

Die Positionen der Objekte werden bevorzugt ausgewertet, insbesondere unter Einbeziehung der bisherigen Bewegung, um zu entscheiden, ob eine Unfallgefahr besteht. Die sicheren Objektpositionen sind kein Selbstzweck, sondern Grundlage einer Gefährdungsüberwachung. Es kann damit insbesondere eingeschätzt werden, ob ein Objekt einer Maschine oder einer sonstigen Gefahrenquelle zu nahe kommt. Die Bewegungshistorie ist aus der Objektverfolgung ebenfalls bekannt und kann in die Gefährdungsbeurteilung einbezogen werden, insbesondere die Bewegungsrichtung und/oder die Geschwindigkeit. Wird eine Unfallgefahr erkannt, so erfolgt vorzugsweise eine Absicherungsmaßnahme, mit der insbesondere eine überwachte Maschine in einen sicheren Zustand versetzt wird. Je nach Situation kann dafür die Maschine verlangsamt oder ganz angehalten oder eine Ausweichbewegung veranlasst werden.

Das erfindungsgemäße 3D-Sensorsystem umfasst mindestens einen 3D-Sensor und mindestens eine Steuer- und Auswertungseinheit, in der eine der erläuterten Ausführungsformen des Verfahrens zur automatischen Konfiguration des 3D-Sensors für eine sichere Objektverfolgung implementiert ist. Der 3D-Sensor ist insbesondere eine 3D-Kamera wie einleitend vorgestellt. Es ist auch ein Verbundsystem aus mehreren 3D-Sensoren denkbar. Die möglichen Ausgestaltungen der Steuer- und Auswertungseinheit entsprechen den oben erläuterten Recheneinheiten, auf denen das automatische Verfahren ablaufen kann. Das 3D-Sensorsystem ist sicher im Sinne eines Sicherheitsniveaus einer einschlägigen Sicherheitsnorm.

Die Steuer- und Auswertungseinheit ist vorzugsweise weiterhin dafür ausgebildet, im Anschluss an die Konfiguration durch Auswertung zyklisch aufgenommener 3D-Bilder eine sichere Objektverfolgung durchzuführen. Damit werden auf sichere Weise aktuelle Positionen und bei Bedarf das sonstige Bewegungsverhalten der sicherheitsrelevanten Objekte für eine sicherheitstechnische Überwachung zur Verfügung gestellt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer Lichtlaufzeitkamera als Beispiel eines 3D-Sensors;
- Fig. 2: ein beispielhaftes von einem 3D-Sensor aufgenommenes 3D-Bild mit darin erkannten Objekten;
- Fig. 3: ein beispielhaftes Ablaufdiagramm für die Konfiguration eines Detektionsbereichs für eine Objektverfolgung mit einem 3D-Sensor;
- Fig. 4: ein beispielhaftes alternatives Ablaufdiagramm mit Verwendung eines Lagesensors;
- Fig. 5: ein Beispielbild zur Erläuterung von Bildbereichen, in denen eine Bewegung eines sicherheitsrelevanten Objekts außerhalb einer Referenzfläche stattfindet;
- Fig. 6: ein beispielhaftes Ablaufdiagramm in einer weiteren Alternative mit Bestimmung von Veränderungen von gemessenen Abständen; und
- Fig. 7: ein beispielhaftes von einem 3D-Sensor aufgenommenes 3D-Bild mit sicherheitsrelevanten bewegten Objekten und irrelevanten statischen Objekten.

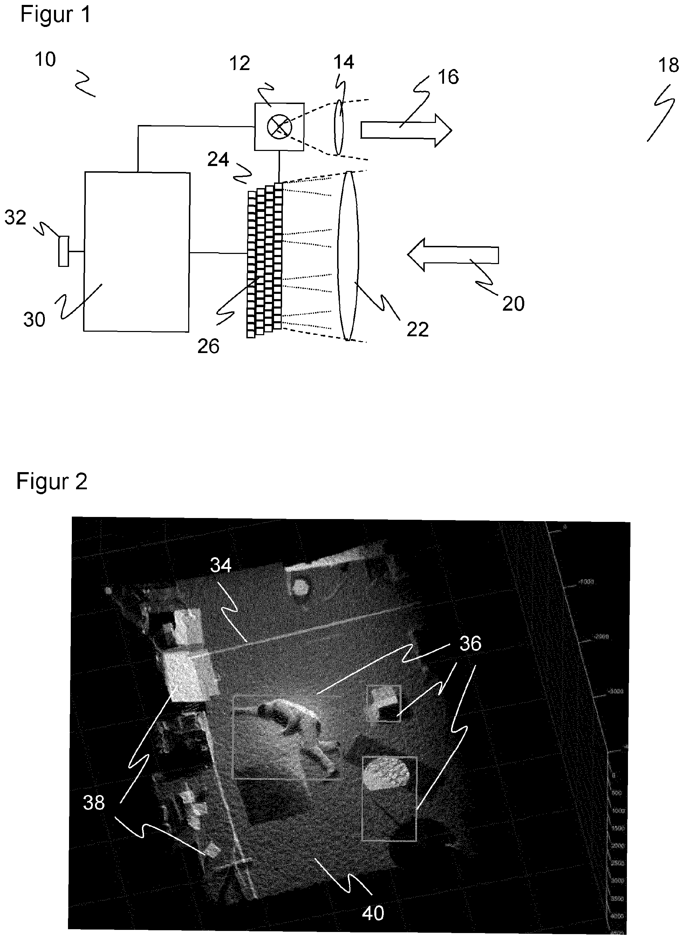

Figur 1 zeigt eine schematische Blockdarstellung einer Lichtlaufzeitkamera als Beispiel eines 3D-Sensors 10. Eine Beleuchtungseinheit 12 sendet durch eine Sendeoptik 14 moduliertes Sendelicht 16 in einen Erfassungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz im Bereich von 1 MHz bis 1000 MHz moduliert wird. Die Modulation ist beispielsweise sinus- oder rechteckförmig, jedenfalls eine periodische Modulation.

Trifft das Sendelicht 16 in dem Erfassungsbereich 18 auf ein Objekt, so wird ein Teil als Empfangslicht 20 zu dem 3D-Sensor 10 zurückgeworfen und dort durch eine Empfangsoptik 22, beispielsweise eine Einzellinse oder ein Empfangsobjektiv, auf einen Bildsensor 24 geführt. Der Bildsensor 24 weist eine Vielzahl von beispielsweise zu einer Matrix oder Zeile angeordneten Empfangselementen oder Empfangspixeln 26 auf. Die Auflösung des Bildsensors 24 kann von einigen bis hin zu tausenden oder Millionen Empfangspixeln 26 reichen. Die Pixelanordnung ist vorzugsweise eine Matrix, so dass sich eine laterale Ortsauflösung in einer X-Richtung und einer Y-Richtung ergibt, was sich mit der Z-Richtung der Abstandsmessung zu den dreidimensionalen Bilddaten ergänzt. Die Empfangspixel 26 sind jeweils für eine Demodulation entsprechend einem Lock-In-Verfahren ausgebildet. Durch mehrere Messungen mit unterschiedlichen Phasen zwischen der für das Sendelicht 16 verwendeten Modulationsfrequenz und der zum Demodulieren verwendeten Modulationsfrequenz wird der absolute Phasenversatz aufgrund der Lichtlaufzeit durch den Erfassungsbereich 18 rekonstruiert, der in einen Abstandswert je Empfangspixel 26 umgerechnet wird.

Eine Steuer- und Auswertungseinheit 30 ist mit dem Bildsensor 24 und der Beleuchtungseinheit 12 verbunden. Die Funktionalität für das Modulieren des Sendelichts 16 und das Demodulieren des Empfangslichts 20 mit geeignetem Zeitverhalten für eine Lichtlaufzeitmessung kann in beliebiger Weise auf die Steuer- und Auswertungseinheit 30 und die Beleuchtungseinheit 12 beziehungsweise den Bildsensor 24 und dessen Empfangspixel 26 verteilt sein. Als Ergebnis der Bildaufnahme und Lichtlaufzeitmessung wird ein 3D-Bild, Abstandsbild oder Tiefenbild erzeugt. Das 3D-Bild wird in der Steuer- und Auswertungseinheit 30 selbst ausgewertet oder unverarbeitet oder vorverarbeitet an einer Schnittstelle 32 ausgegeben. Die Schnittstelle 32 oder alternativ eine oder mehrere weitere, nicht gezeigte Anschlüsse dienen umgekehrt der Eingabe von Steuersignalen oder Parametrierungen des 3D-Sensors 10.

Die zu Figur 1 erläuterte Lichtlaufzeitkamera ist nur ein Beispiel für einen 3D-Sensor 10. Es sind andere 3D-Sensoren denkbar, insbesondere die einleitend kurz genannten Varianten einer 3D-Kamera, prinzipiell auch nicht-optische 3D-Sensoren. Statt nur eines 3D-Sensors 10 kann ein Sensorverbund eingesetzt werden. Die Erfindung betrifft im Kern nicht die Ausgestaltung des 3D-Sensors 10, sondern dessen Konfiguration für eine sichere Objektverfolgung, die im Anschluss unter Bezugnahme auf die Figuren 2 bis 7 erläutert wird. Das entsprechende Konfigurationsverfahren ist in beliebiger Verteilung in der Steuer- und Auswertungseinheit 30 des 3D-Sensors und/oder einer daran angeschlossenen Recheneinheit implementiert.

Figur 2 zeigt ein beispielhaftes von einem 3D-Sensor aufgenommenes 3D-Bild mit darin erkannten Objekten. Die Objekterkennung und damit auch die Objektverfolgung ist auf einen Detektionsbereich 34 innerhalb des gesamten Erfassungsbereichs 18 und damit 3D-Bildes beschränkt, in dem sich sicherheitsrelevante Objekte 36 befinden können. Damit werden insbesondere statische Objekte 38 am Rand ignoriert. Das Auffinden des passenden Detektionsbereichs 34 für eine verlässliche Absicherung ist das Ziel der nun zu beschreibenden Konfiguration.

Auf Basis des konfigurierten Detektionsbereichs 34 kann dann im anschließenden Betrieb eine sichere Objektverfolgung, d.h. eine Objektverfolgung als Sicherheitsfunktion realisiert werden. Dabei geht es darum, bewegliche Objekte 36 in einer für Sicherheitsanwendungen und damit die Unfallvermeidung zum Personenschutz ausreichenden Verlässlichkeit zu detektieren und ihren Bewegungsverlauf zu verfolgen. Mit jedem Detektionszyklus wird eine aktuelle Position der erkannten Objekte 36 im Bild gewonnen. Zusätzlich ist die Bewegungshistorie bekannt, aus der sich ergänzende Informationen wie die Bewegungsrichtung und die Geschwindigkeit ergeben. Im Falle einer in den 3D-Sensor 10 integrierten sicheren Objektverfolgung können Positionen und gegebenenfalls ergänzende Informationen zyklisch an der Schnittstelle 32 bereitgestellt werden. Die Ergebnisse der Objektverfolgung können für eine autonome Pfadplanung von Fahrzeugen und zur Lokalisierung von Objekten und Personen in einem großen Betriebsumfeld verwendet werden. Die Daten sind zudem diversitär-redundant zu den Ortungsdaten eines Funklokalisierungssystems und können zu deren Verifikation verwendet werden.

Die beweglichen, jedenfalls potentiell (sicherheits-)relevanten Objekte 36 werden in Bezug zu einer Referenzfläche 40 detektiert, vorzugsweise dem Boden. Beispielsweise wird in jedem Detektionszyklus die in dem 3D-Bild erfasste Szene mit einer bekannten Referenzszene verglichen, um anhand der geometrischen Unterschiede die relevanten Objekte 36 zu erkennen. Dafür ist erforderlich, dass im Rahmen der Konfiguration genau festgelegt ist, wo sich die Referenzfläche 40 samt Lage und Orientierung im Raum befindet. Zudem werden mit dem Detektionsbereich 34 außerhalb gelegene Bereiche festgelegt, in denen eine Detektion irrelevant ist. Das ist in Figur 2 durch die statische Objekte 38 am Rand dargestellt. Derartige irrelevante Objekte können beispielsweise Regale, Paletten oder Kisten sein, bei denen von vorneherein klar ist, dass sie als Bewegungsbereiche relevanter Objekte 36 nicht in Frage kommen. Deshalb können entsprechende Bereiche ausgeblendet oder als ruhende Bewegungshindernisse klassifiziert werden. Das reduziert den Aufwand und mögliche Fehldetektionen.

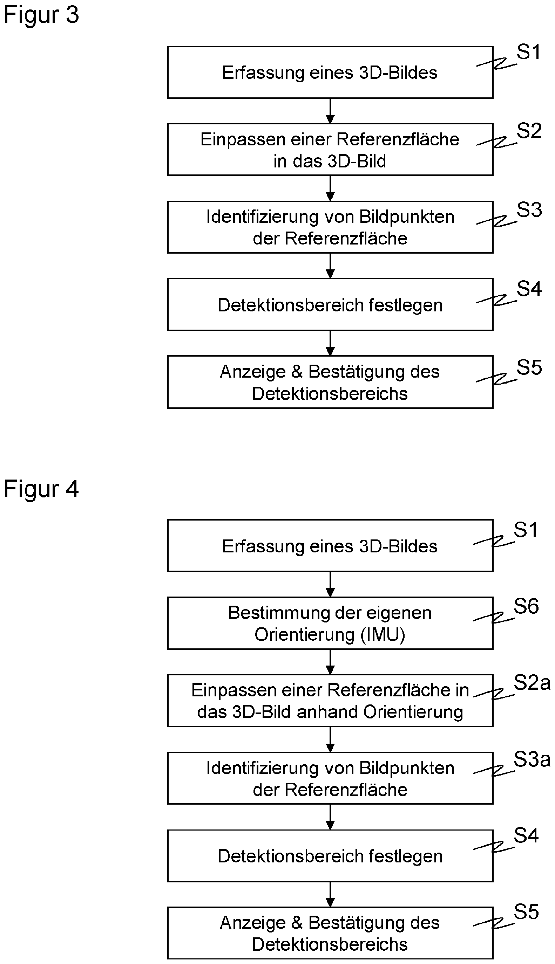

Figur 3 zeigt ein beispielhaftes Ablaufdiagramm für die Konfiguration des Detektionsbereichs 34. Nach der mechanischen Anbringung und dem elektrischen Anschluss des 3D-Sensors 10 wird die sichere Objekttrackingfunktion in einem automatisch ablaufenden Prozess konfiguriert.

In einem Schritt S1 werden von dem 3D-Sensor 10 eines oder mehrere 3D-Bilder der Szene in dem Erfassungsbereich 18 aufgenommen. Mehrere 3D-Bilder können für eine Wiederholung einer Einzelbildauswertung herangezogen werden. Vorzugsweise erfolgt aber eine Auswertung mehrerer 3D-Bilder übergreifend, um beispielsweise in einzelnen 3D-Bildern verdeckte Teilbereiche durch andere 3D-Bilder zu kompensieren.

In einem Schritt S2 wird in das mindestens eine 3D-Bild eine Referenzfläche 40 eingepasst. Dafür sind verschiedene 3D-Algorithmen an sich bekannt, die beispielsweise in einem Optimierungsverfahren unter Einbeziehung aller oder nur eines Teils der Bildpunkte durch Drehen, Verschieben und Veränderung von Form und Größe der Referenzfläche 40 ein Fehlermaß der zu der Referenzfläche 40 verbleibenden Ablagen minimieren. Vorzugsweise erfolgt die Einpassung unter der Annahme, dass die Referenzfläche 40 die größte Fläche oder Ebene ist, die mit den Bildpunkten des 3D-Bildes im Sinne kleiner Restablagen oder eines sonstigen Fehlermaßes verträglich ist.

In einem Schritt S3 werden diejenigen Bildpunkte identifiziert, die die Referenzfläche 40 aufgenommen haben. Das Kriterium hierfür ist, dass der von dem Bildpunkt gemessene Abstand jedenfalls bis auf eine Rauschtoleranz derjenige der Referenzfläche 40 ist. Die beiden Schritte S2 und S3 sind vor allem der Erläuterung halber scharf getrennt. Je nach Algorithmus erfolgt das Einpassen der Referenzfläche 40 und das Auffinden der der Referenzfläche 40 entsprechenden Bildpunkte zumindest teilweise simultan.

In einem Schritt S4 wird der Detektionsbereich 34 anhand der im Schritt S3 identifizierten Bildpunkte der Referenzfläche 40 festgelegt. Das kann im einfachsten Fall schlicht die Vereinigungsmenge dieser Bildpunkte sein. Vorzugsweise erfolgt noch eine zusätzliche Bearbeitung, um den Detektionsbereich 34 zu erweitern, abzurunden oder auch zu verkleinern, beispielsweise um Messausreißer an ihre Nachbarschaft anzupassen, dem Detektionsbereich 34 eine reguläre Form zu geben oder irrelevante Objekte 38 auszuschließen.

In einem Schritt S5 wird abschließend der konfigurierte Detektionsbereich 34 angezeigt, damit der Anwender dessen Korrektheit bestätigt. Damit wird eine weitere Sicherheitsebene eingezogen, und die letzte Verantwortung über die Sicherheit verbleibt beim Anwender oder Sicherheitsexperten, wie dies viele Sicherheitsnormen verlangen. Die Anzeige erfolgt beispielsweise als 2D-Bild oder 3D-Bild der Szenerie mit überlagerter Darstellung des Detektionsbereichs 34. Dem Anwender kann zu diesem Zeitpunkt die Möglichkeit gegeben werden, den Detektionsbereich 34 vor der Freigabe noch zu verändern. Dafür werden beispielsweise Werkzeuge analog zu einem Zeichen- oder CAD-Programm zur Verfügung gestellt.

Der Ablauf gemäß Figur 3 ist eine einfache Möglichkeit der automatischen Konfiguration des Detektionsbereichs 34 mit pixelgenauer Unterscheidung der zu überwachenden Referenzfläche 40 von irrelevanten Bereichen, die ausgeblendet werden können. Im Folgenden werden verschiedene Alternativen, Abwandlungen und Erweiterungen erläutert.

Figur 4 zeigt ein beispielhaftes alternatives Ablaufdiagramm mit Verwendung eines Lagesensors. Der Lagesensor (beispielsweise IMU, Inertial Measurement Unit) ist vorzugsweise in den 3D-Sensor 10 integriert und bestimmt dessen Orientierung im Raum, insbesondere relativ zum Schwerkraftfeld der Erde. Der in Figur 4 gezeigte Ablauf entspricht im Grundsatz demjenigen der Figur 3, so dass nur die Unterschiede erläutert werden.

Im Anschluss an die Erfassung eines 3D-Bildes im Schritt S1 oder davor beziehungsweise parallel dazu wird in einem Schritt S6 mit dem Lagesensor die eigene Orientierung des 3D-Sensors 10 bestimmt. Wenn sich die Montageposition des 3D-Sensors 10 nicht ändert, genügt eine einmalige oder seltene Bestimmung der Orientierung, während beispielsweise für mobile Anwendungen des 3D-Sensors 10 eine aktuelle Bestimmung der Orientierung erfolgen sollte. Unter der Voraussetzung, dass die Referenzfläche 40 senkrecht zum Schwerkraftfeld der Erde ausgerichtet ist, wie im Falle des Bodens, oder dass alternativ eine Abweichung bekannt ist, lässt sich aus der eigenen Orientierung des 3D-Sensors 10 die Orientierung der Referenzfläche 40 relativ zu dem 3D-Sensor 10 und damit in dem jeweiligen 3D-Bild vorhersagen.

Dementsprechend sind die Schritte S2 und S3 gemäß Figur 3 modifiziert. In einem modifizierten Schritt S2a erfolgt das Einpassen der Referenzfläche 40 nun in Kenntnis der mit dem Lagesensor ermittelten Orientierung der Referenzfläche 40. Das schränkt den Suchraum eines Optimierungsverfahrens erheblich ein, mit dem die Referenzfläche 40 eingepasst wird. Entsprechend werden in einem modifizierten Schritt S3a die der Referenzfläche 40 entsprechenden Bildpunkte mit weniger Aufwand und in der Regel auch präziser identifiziert.

Es ist denkbar, die Orientierung der Referenzfläche 40 zusätzlich algorithmisch zu bestimmen, wie zu Schritt S2 der Figur 3 erläutert. Damit stellen die Figuren 3 und 4 einerseits Alternativen, aber auch eine Kombinationsmöglichkeit dar. In der Kombination wird durch redundante Ermittlung beziehungsweise Plausibilisierungsmöglichkeiten die Verlässlichkeit der Konfiguration weiter erhöht, was gerade in sicherheitstechnischer Verwendung sehr wertvoll ist.

Es wurde schon kurz auf die Möglichkeit eingegangen, mehrere 3D-Bilder oder eine Bildsequenz zu erfassen und auszuwerten. Zum einen ermöglicht das bei statischer Szene ein gewisses Ausmitteln von Messfehlern. Bevorzugt jedoch wird dadurch der Konfigurationsablauf um eine zusätzliche Bewegungsphase erweitert. In dieser Phase ist der Anwender angehalten, die Personen und beweglichen Objekte exemplarisch in den zugänglichen Bereichen zu bewegen. Beispielsweise sollen Personen den Bereich durchschreiten oder Fahrzeuge entlang ihres programmierten Pfades den Erfassungsbereich 18 durchqueren. Es wird dann während der Bewegungsphase eine kontinuierliche Bildserie aufgenommen und in der ganzen Bildserie nach Bildpunkten gesucht, die mit der Referenzfläche 40 vereinbar sind. Durch die Bewegung ist sichergestellt, dass alle Pixel, die zum Bewegungsbereich gehören, irgendwann frei sind und als der Referenzfläche 40 entsprechend identifiziert werden. Dadurch werden Totbereiche vermieden, in denen Personen oder bewegliche Objekte vorübergehend einen Teil der Referenzfläche 40 verdecken und die deshalb oder eine Bewegungsphase fehlerhaft aus dem Detektionsbereich 34 ausgeschlossen würden. Darüber hinaus können schon die aufgrund der Bewegung stark unterschiedlich gemessenen Abstände als wichtiger Indikator für die Zugehörigkeit zum Detektionsbereich 34 dienen. In Ergänzung zu einer dedizierten Bewegungsphase ist auch möglich, die Konfiguration parallel zum eigentlichen Betrieb fortzusetzen und Daten für eine weitere Optimierung der Konfiguration zu sammeln.

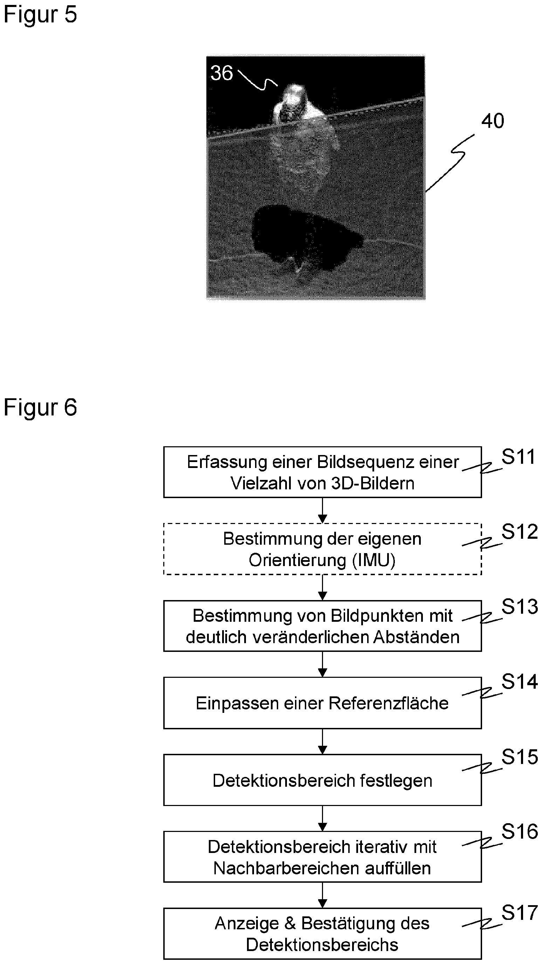

Figur 5 illustriert eine Sondersituation mit einem relevanten Objekt 36 am Rande der Referenzfläche 40, beispielsweise nahe einer Wand. Der Kopfbereich der Person wird außerhalb der Referenzfläche 40 erfasst. In diesem Fall kann es sinnvoll sein, den Detektionsbereich 34 über die Referenzfläche 40 hinaus zu erweitern und Bildpunkte hinzuzunehmen, die den Kopfbereich beziehungsweise die dahinterliegende Wand erfassen. Solche Bildpunkte werden beispielsweise daran erkannt, dass sich während einer Bewegungsphase der Konfiguration die von ein und demselben Bildpunkt gemessenen Abstandswerte signifikant verändern, beispielsweise um mehr als eine Rauschtoleranz. Dieser Gedanke soll nun noch ein wenig vertieft werden, denn damit lassen sich weitere Vorteile erzielen.

Figur 6 zeigt ein beispielhaftes Ablaufdiagramm der Konfiguration mit Bestimmung von Veränderungen von gemessenen Abständen. In einem Schritt S11 wird entsprechend dem bisherigen Schritt S1 eine Bildsequenz mit einer Vielzahl von 3D-Bildern aufgenommen, vorzugsweise während einer Bewegungsphase, in der sich relevante Objekte 36 in dem Erfassungsbereich 18 bewegen. In einem Schritt S12 kann optional und analog dem Schritt S6 der Figur 4 mittels eines Lagesensors die eigene Orientierung des 3D-Sensors 10 und damit die Orientierung der Referenzfläche 40 bestimmt werden.

In einem Schritt S13 werden Veränderungsbereiche in dem Erfassungsbereich 18 bestimmt. Dass sind Bildpunkte oder Gruppen von Bildpunkten, in denen sich der gemessene Abstandswert über die Bildsequenz hinweg stark verändert. Das Kriterium dafür kann das Überschreiten einer Rauschtoleranz sein.

In einem Schritt S14 wird analog dem Schritt S2 oder S2a eine Referenzfläche 40 eingepasst. Sofern zuvor der optionale Schritt S12 ausgeführt wurde, ist deren Orientierung bekannt. Anhand der mit Schritt S13 bestimmten Veränderungsbereiche kann der Abstand der Referenzfläche 40 bestimmt werden. Wegen der zu Figur 5 erläuterten Sondersituation können die Veränderungsbereiche zuvor noch für sich ausgewertet werden, um zwischen Bildpunkten in Veränderungsbereichen zu unterscheiden, die der Referenzfläche 40 entsprechen und die den Abstand der Referenzfläche 40 angeben, und solchen, die das beispielsweise wegen einer Randlage an einer Wand nicht tun. Somit steht für das Einpassen der Referenzfläche 40 Vorwissen über Orientierung und/oder Abstand der Referenzfläche zur Verfügung, wobei nochmals alternativ oder zusätzlich die Referenzfläche 40 wie im Schritt S2 ohne Vorwissen eingepasst werden kann. Eine weitere Alternative besteht darin, gar nicht mehr gezielt eine Referenzfläche 40 einzupassen, sondern die Referenzfläche 40 direkt aus den Veränderungsbereichen abzuleiten.

In einem Schritt S15 wird dann entsprechend dem Schritt S4 der Figuren 3 und 4 anhand der Veränderungsbereiche und/oder der Referenzfläche 40 ein vorläufiger Detektionsbereich 34 festgelegt. Dabei können zuvor analog den Schritten S3, S3a die der Referenzfläche 40 entsprechenden Bildpunkte aufgefunden werden.

In einem optionalen Schritt S16 kann der vorläufige Detektionsbereich 34 zur Ermittlung des gesamten zugänglichen Bereichs aufgefüllt werden, weshalb das Ergebnis des Schritts S15 als nur vorläufiger Detektionsbereich 34 bezeichnet wurde. Dabei wird ausgehend von dem bisher bestimmten Detektionsbereich 34 und somit schon bekannten Bereichen der Referenzfläche 40 in der angrenzenden Nachbarschaft von Bildpunkten geprüft, ob ein benachbarter Bildpunkt ebenfalls zur Referenzfläche 40 gehört und in diesem Fall zum Detektionsbereich 34 hinzugenommen wird. Das Kriterium ist hier vorzugsweise, dass sich der in einem benachbarten Bildpunkt gemessene Abstandswert um höchstens eine Abstandstoleranz von seinem bereits zum Detektionsbereich 34 gehörigen benachbarten Bildpunkt unterscheidet. Diese Nachbarschaftsprüfung kann iterativ wiederholt werden, bis in dem angewachsenen Detektionsbereich 34 alle zugänglichen Bereiche erfasst sind.

Durch eine etwa größere Abstandstoleranz lassen sich auch Detektionsbereiche automatisch konfigurieren, die nicht in einer Ebene liegen. Wenn zum Beispiel eine Treppe im Erfassungsbereich 18 liegt, dann werden während der Bewegungsphase die einzelnen Treppenstufen im Schritt S13 al Veränderungsbereich bestimmt und später im Schritt S16 zum Detektionsbereich 34 hinzugefügt. Auf ähnliche Weise kann eine geneigte Rampe hinzugefügt werden. Grundsätzlich kann ein ähnliches Ergebnis durch Einpassen einer Referenzfläche 40 erzielt werden, die eine gewisse Neigung beziehungsweise Krümmung aufweisen darf. Dabei entstehen dann aber im Gegensatz zu einem iterativen Auffüllen Schwierigkeiten, den Optimierungsalgorithmus geeignet zu parametrieren, damit weiterhin nur geeignete Referenzflächen 40 aufgefunden werden.

In einem die Konfiguration abschließenden Schritt S17 wird analog dem Schritt S5 der konfigurierte Detektionsbereich angezeigt, gegebenenfalls nachbearbeitet und freigegeben.

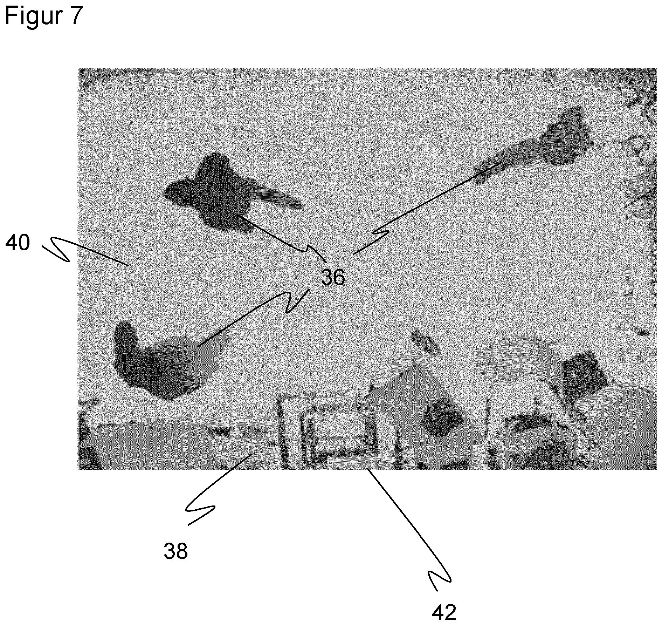

Figur 7 zeigt nochmals ein beispielhaftes von dem 3D-Sensor 10 aufgenommenes 3D-Bild mit sicherheitsrelevanten bewegten Objekten 36 und irrelevanten statischen Objekten 38. Die statischen Objekte 38 können dazu führen, dass gewisse Teile 42 des Bodens und damit der Referenzfläche 40 tatsächlich gar nicht zugänglich sind. Sie sollten demnach vorzugsweise aus dem Detektionsbereich 34 ausgeschlossen sein. Nachträglich ist dies nur mit höherem algorithmischem Aufwand vorstellbar, der mögliche Pfade innerhalb des Detektionsbereichs 34 testet. Durch das iterative Auffüllen im Schritt S16 ausgehend von Veränderungsbereichen werden solche unzugänglichen Teile 42 gar nicht erst dem Detektionsbereich 34 hinzugefügt.

Obwohl die Figuren 3, 4 und 7 jeweils separat einen beispielhaften Ablauf zeigen, sind zahlreiche Mischformen denkbar, die einzelne oder mehrere Schritte ersetzend oder kumulierend aus einem Ablauf in den anderen Ablauf übernehmen. Dies gilt insbesondere für die Verwendung von 3D-Bildsequenzen statt einzelner 3D-Bilder, den Einsatz eines Lagesensors zur Bestimmung der Orientierung der Referenzfläche 40, das Einpassen der Referenzfläche 40 mit und ohne Vorwissen über deren Orientierung und/oder Abstand, das Auffinden von Veränderungsbereichen als Ausgangspunkt für Bildpunkte des Detektionsbereichs 34 oder das Auffüllen dies Detektionsbereichs 34 anhand von Nachbarschaftsvergleichen.

## Patentansprüche

1. Verfahren zur automatischen Konfiguration eines 3D-Sensors (10) für eine sichere Objektverfolgung mit dem Ziel der Konfiguration, einen Detektionsbereich (34) innerhalb eines Erfassungsbereichs (18) des 3D-Sensors (10) zu finden, in dem sich mögliche sicherheitskritische Objekte bewegen und auf den die Objektverfolgung beschränkt wird, wobei mit dem 3D-Sensor (10) mindestens ein 3D-Bild aufgenommen wird und anhand des mindestens einen 3D-Bildes der Detektionsbereich (34) festgelegt wird, wobei der Begriff sicher die Erfüllung von Anforderungen einer Sicherheitsnorm für berührungslos wirkende Schutzeinrichtungen oder Maschinensicherheit zur Unfallvermeidung bedeutet,
**dadurch gekennzeichnet, dass**, in dem mindestens einen 3D-Bild Bildpunkte identifiziert werden, die einer Referenzfläche (40), insbesondere Bodenebene entsprechen, für die der von dem Bildpunkt gemessene Abstand bis auf eine Rauschtoleranz diejenige der Referenzfläche (40) ist, und der Detektionsbereich (34) als die Vereinigungsmenge dieser Bildpunkte oder als die mit einem Filter bearbeitete Vereinigungsmenge dieser Bildpunkte festgelegt wird, wobei durch das Filter der Detektionsbereich (34) erweitert, abgerundet oder verkleinert, dem Detektionsbereich (34) eine reguläre Form gegeben oder unzugängliche Bereiche der Referenzfläche (40) oder irrelevante Objekte (38) ausgeschossen werden, und dass eine Bildsequenz mit einer Vielzahl von 3D-Bildern aufgenommen wird, während sich Objekte (36) durch den Erfassungsbereich (18) bewegen, dass wiederholt anhand der 3D-Bilder aus der Bildsequenz Bildpunkte identifiziert werden, die der Referenzfläche (40) entsprechen, um auch temporär verdeckte Teile der Referenzfläche (40) zu erfassen, weil Objekte sich weiterbewegt haben, und dass Bildpunkte bestimmt werden, in denen sich der jeweils gemessene Abstand über die 3D-Bilder der Bildsequenz um mehr als eine Rauschtoleranz verändert, und diese Bildpunkte dem Detektionsbereich (34) zugeschlagen werden.

2. Verfahren nach Anspruch 1,
wobei die 3D-Lage der Referenzfläche (40) mittels Einpassens einer Ebene bestimmt wird, die bestmöglich mit den in dem mindestens einen 3D-Bild aufgenommenen Bildpunkten übereinstimmt.

3. Verfahren nach Anspruch 1 oder 2,
wobei der 3D-Sensor (10) mittels eines Lagesensors die eigene Orientierung misst, daraus eine erwartete Orientierung der Referenzfläche (40) abgeleitet wird und die erwartete Orientierung verwendet wird, um der Referenzfläche (40) entsprechende Bildpunkte zu identifizieren.

4. Verfahren nach einem der vorhergehenden Ansprüche,
wobei der Detektionsbereich (34) aufgefüllt wird, indem ausgehend von dem bisher bestimmten Detektionsbereich (34) in der angrenzenden Nachbarschaft von Bildpunkten geprüft wird, ob der sich in einem benachbarten Bildpunkt gemessene Abstandswert um höchstens eine Abstandstoleranz von seinem bereits zum Detektionsbereich (34) gehörigen benachbarten Bildpunkt unterscheidet, und wobei diese Nachbarschaftsprüfung insbesondere iterativ wiederholt wird.

5. Verfahren nach Anspruch 4,
wobei die Abstandstoleranz groß genug gewählt ist, dass eine Treppenstufe oder geneigte Rampe noch zu der Referenzfläche (40) verträglich ist.

6. Verfahren nach einem der vorhergehenden Ansprüche,
wobei der konfigurierte Detektionsbereich (34) angezeigt und eine Bestätigung angefordert wird, ehe der Detektionsbereich (34) für eine sichere Objektverfolgung verwendet wird.

7. Verfahren nach einem der vorhergehenden Ansprüche,
wobei im Anschluss an die Konfiguration des Detektionsbereichs (34) zyklisch weitere 3D-Bilder aufgenommen und darin Objekte (36) verfolgt werden, um als Sicherheitsfunktion die jeweils aktuelle Position von beweglichen Objekten (36) in dem Detektionsbereich (34) auszugeben.

8. Verfahren nach Anspruch 7,
wobei die Positionen der Objekte (36) insbesondere unter Einbeziehung der bisherigen Bewegung ausgewertet werden, um zu entscheiden, ob eine Unfallgefahr besteht, um insbesondere in diesem Fall eine überwachte Maschine in einen sicheren Zustand zu versetzen.

9. 3D-Sensorsystem mit mindestens einem 3D-Sensor (10) und mit mindestens eine Steuer- und Auswertungseinheit (30), in der ein Verfahren zur automatischen Konfiguration des 3D-Sensors (10) für eine sichere Objektverfolgung nach einem der vorhergehenden Ansprüche implementiert ist.

10. 3D-Sensorsystem nach Anspruch 9,
wobei die Steuer- und Auswertungseinheit (30) weiterhin dafür ausgebildet ist, im Anschluss an die Konfiguration durch Auswertung zyklisch aufgenommener 3D-Bilder eine sichere Objektverfolgung durchzuführen.

## Claims

1. A method for automatically configuring a 3D sensor (10) for safe object tracking with the aim of the configuration to find a detection area (34) within a detection range (18) of the 3D sensor (10) in which possible safety-critical objects move and to which the object tracking is restricted, wherein at least one 3D image is recorded with the 3D sensor (10) and the detection area (34) is determined on the basis of the at least one 3D image, wherein the term safe means the fulfillment of requirements of a safety standard for non-contact protective equipment or machine safety for accident prevention,
**characterized in that** in the at least one 3D image, image points are identified that correspond to a reference surface (40), in particular floor plane, for which the distance measured by the image point is that of the reference surface (40) except for a noise tolerance, and the detection area (34) is defined as the union of these pixels or as the union of these pixels processed with a filter, the detection area (34) being expanded, rounded or reduced, being given a regular shape, or inaccessible areas of the reference surface (40) or irrelevant objects (38) being excluded by the filter, and **in that** an image sequence with a plurality of 3D images is recorded while objects (36) move through the detection area (18), **in that** image points corresponding to the reference surface (40) are repeatedly identified on the basis of the 3D images from the image sequence, in order to also detect temporarily obscured parts of the reference surface (40) because objects have moved on, and **in that** image points are determined in which the respectively measured distance over the 3D images of the image sequence changes by more than a noise tolerance, and these image points are added to the detection area (34).

2. The method according to claim 1,
wherein the 3D position of the reference surface (40) is determined by fitting a plane which corresponds as closely as possible to the pixels recorded in the at least one 3D image.

3. The method according to claim 1 or 2,
wherein the 3D sensor (10) measures its own orientation by means of a position sensor, an expected orientation of the reference surface (40) is derived therefrom, and the expected orientation is used to identify pixels corresponding to the reference surface (40).

4. The method according to any of the preceding claims,
wherein the detection area (34) is filled up by checking, starting from the previously determined detection area (34), in the adjacent neighborhood of pixels whether the distance value measured in an adjacent pixel differs by at most a distance tolerance from its adjacent pixel already belonging to the detection area (34), and wherein this neighborhood check is repeated, in particular iteratively.

5. The method according to claim 4,
wherein the distance tolerance is selected large enough that a step or inclined ramp is still compatible with the reference surface (40).

6. The method according to any of the preceding claims,
wherein the configured detection area (34) is displayed and a confirmation is requested before the detection area (34) is used for safe object tracking.

7. The method according to any of the preceding claims,
wherein, following the configuration of the detection area (34), further 3D images are cyclically recorded and objects (36) are tracked therein in order to output the respective current position of moving objects (36) in the detection area (34) as a safety function.

8. The method according to claim 7,
wherein the positions of the objects (36) are evaluated, in particular taking into account the previous movement, in order to decide whether there is a risk of an accident, in particular in order to place a monitored machine in a safe state in this case.

9. A 3D sensor system having at least one 3D sensor (10) and having at least one control and evaluation unit (30), with a method for automatic configuration of the 3D sensor (10) for reliable object tracking according to any of the preceding claims being implemented in the control and evaluation unit (30).

10. The 3D sensor system according to claim 9,
wherein the control and evaluation unit (30) is furthermore configured to carry out reliable object tracking following the configuration by evaluating cyclically recorded 3D images.

## Revendications

1. Procédé de configuration automatique d'un capteur 3D (10) pour un suivi d'objets sécurisé, la configuration ayant pour but de trouver une zone de détection (34) à l'intérieur d'une zone de saisie (18) du capteur 3D (10), dans laquelle se déplacent des objets éventuels sensibles en termes de sécurité et à laquelle le suivi d'objets est restreint,
dans lequel au moins une image 3D est enregistrée avec le capteur 3D (10) et la zone de détection (34) est définie à l'aide de ladite au moins une image 3D, le terme « sécurisé » signifiant le respect des exigences d'une norme de sécurité pour les équipements de protection électrosensibles ou la sécurité des machines afin d'éviter les accidents,
**caractérisé en ce que**
des points d'image sont identifiés dans ladite au moins une image 3D, qui correspondent à une surface de référence (40), en particulier à un plan du sol, pour lesquels la distance mesurée du point d'image est celle de la surface de référence (40), à une tolérance de bruit près, et la zone de détection (34) est définie comme union d'ensembles de ces points d'image ou comme union d'ensembles de ces points d'image traitée avec un filtre, sachant que le filtre élargit, arrondit ou réduit la zone de détection (34), donne à la zone de détection (34) une forme régulière ou exclut des zones inaccessibles de la surface de référence (40) ou des objets non pertinents (38), et
**en ce qu'**une séquence d'images comprenant une pluralité d'images 3D est enregistrée pendant que des objets (36) se déplacent à travers la zone de saisie (18),
**en ce que** des points d'image sont identifiés de manière répétée à partir des images 3D de la séquence d'images, qui correspondent à la surface de référence (40), afin de saisir également des parties temporairement cachées de la surface de référence (40) parce que les objets ont continué à se déplacer,
et **en ce que** des points d'image sont déterminés, dans lesquels la distance respective mesurée varie de plus d'une tolérance de bruit sur les images 3D de la séquence d'images, et ces points d'image sont ajoutés à la zone de détection (34).

2. Procédé selon la revendication 1,
dans lequel la position 3D de la surface de référence (40) est déterminée par ajustement d'un plan qui coïncide le mieux possible avec les points d'image enregistrés dans ladite au moins une image 3D.

3. Procédé selon la revendication 1 ou 2,
dans lequel le capteur 3D (10) mesure sa propre orientation au moyen d'un capteur de position pour en déduire une orientation attendue de la surface de référence (40) et pour utiliser l'orientation attendue afin d'identifier des points d'image correspondant à la surface de référence (40).

4. Procédé selon l'une des revendications précédentes,
dans lequel la zone de détection (34) est comblée en vérifiant, à partir de la zone de détection (34) déterminée jusqu'à présent, dans le voisinage adjacent de points d'image, si la valeur de distance mesurée dans un point d'image voisin diffère au maximum d'une tolérance de distance de celle du point d'image voisin appartenant déjà à la zone de détection (34), et cette vérification de voisinage est en particulier répétée de manière itérative.

5. Procédé selon la revendication 4,
dans lequel la tolérance de distance est choisie suffisamment grande pour qu'une marche d'escalier ou une rampe inclinée soit encore compatible avec la surface de référence (40).

6. Procédé selon l'une des revendications précédentes,
dans lequel la zone de détection configurée (34) est affichée, et une confirmation est demandée avant que la zone de détection (34) ne soit utilisée pour un suivi d'objets sécurisé.

7. Procédé selon l'une des revendications précédentes,
dans lequel, à la suite de la configuration de la zone de détection (34), d'autres images 3D sont enregistrées de manière cyclique et des objets (36) y sont suivis afin d'émettre, en tant que fonction de sécurité, la position actuelle respective d'objets mobiles (36) dans la zone de détection (34).

8. Procédé selon la revendication 7,
dans lequel les positions des objets (36) sont évaluées, en particulier en tenant compte du mouvement précédent, afin de décider s'il existe un risque d'accident, en particulier, dans le cas affirmatif, afin de mettre une machine surveillée dans un état sécurisé.

9. Système de capteur 3D comprenant au moins un capteur 3D (10) et au moins une unité de commande et d'évaluation (30) dans laquelle est mis en oeuvre un procédé de configuration automatique du capteur 3D (10) pour un suivi d'objets sécurisé selon l'une des revendications précédentes.

10. Système de capteur 3D selon la revendication 9,
dans lequel l'unité de commande et d'évaluation (30) est en outre conçue pour effectuer un suivi d'objets sécurisé à la suite de la configuration par évaluation d'images 3D enregistrées de manière cyclique.
